# EUROPÄISCHE PATENTSCHRIFT

(11) **EP 3 335 846 B1**
(45) Veröffentlichungstag und Bekanntmachung des Hinweises auf die Patenterteilung: **24.04.2019**
(21) Anmeldenummer: 16002692.8
(22) Anmeldetag: 19.12.2016
(51) Int. Cl.: B27F 1/02, B23Q 11/00

(54) **WERKZEUGMASCHINE ZUR KANTENBEARBEITUNG EINES WERKSTÜCKS**
MACHINE TOOL FOR MACHINING THE EDGES OF A WORKPIECE
MACHINE-OUTIL POUR L'USINAGE DES BORDS D'UNE PIÈCE

(43) Veröffentlichungstag der Anmeldung: 20.06.2018
(73) Patentinhaber: Ledermann GmbH & Co. KG, 72160 Horb a. N. (DE)
(72) Erfinder: Westfal, Ewald, 72351 Geislingen (DE); Galli, Oliver, 71154 Nufringen (DE); Götz, Paul, 72160 Horb-Dießen (DE); Kreidler, Andreas, 72072 Tübingen (DE); Kreidler, Ralf, 72186 Empfingen (DE)
(74) Vertreter: Zurhorst, Stefan

(56) Entgegenhaltungen:
- EP-A2- 0 426 613
- DE-A1- 3 317 409
- DE-B- 1 287 788

## Beschreibung

Die Erfindung betrifft eine Werkzeugmaschine zur Kantenbearbeitung eines Werkstücks mit den Merkmalen nach dem Oberbegriff des Anspruchs 1. Eine solche Werkzeugmaschine ist aus der DE 33 17 409 A1 bekannt.

Die Kantenbearbeitung von Werkstücken aus Holz oder holzartigen Werkstoffen wie Spanplatten, Fußbodenpaneele oder dergleichen geht mit einem hohen Aufkommen an Spänen einher. Die Späne müssen vom Entstehungsort, also von dort, wo die Werkzeugschneiden mit der Werkstückkante in Eingriff kommen, möglichst umgehend und vollständig entfernt und weggeführt werden. Andernfalls können sie verschiedene nachteilige Wirkungen wie Mehrfachzerspanung, Wärmeentwicklung, Abdruckbildung auf der Werkstückoberfläche oder dergleichen nach sich ziehen.

Im Stand der Technik sind Führungseinrichtungen zur Führung des Werkstücks entlang der Umfangskontur des Rotationswerkzeuges vorgesehen. Solche Führungseinrichtungen umfassen zumindest zwei in einer Vertikalrichtung sich gegenüberliegende Druckelemente, nämlich ein oberes Druckelement und ein unteres Druckelement, zwischen denen das Werkstück gehalten bzw. geführt wird. Zumindest eines der beiden Druckelemente ist relativ zum jeweils anderen Druckelement und auch relativ zur Antriebseinheit in der Vertikalrichtung einstellbar, damit das gewünschte Kantenprofil an der richtigen Stelle des Werkstückes entsteht.

Außerdem werden Spanfanghauben eingesetzt, die an der Antriebseinheit befestigt sind und das Werkzeug sowie den Schnittbereich überdecken. Ein angeschlossenes Sauggebläse soll für eine gesteuerte Absaugung der Späne sorgen. Eine Werkzeugmaschine mit einer solchen Spanfanghaube ist beispielsweise aus der EP 1 870 203 A1 bekannt. Hierbei wird die Kante eines Werkstückes mittels eines Rotationswerkzeugs im Gegenlauf bearbeitet. Das rotierende Fräswerkzeug und auch der Kantenbereich des Werkstücks sind von der Spanfanghaube nahezu dicht umschlossen, um eine gute Absaugung zu gewährleisten. Problematisch ist insbesondere derjenige Bereich der Haube, der unmittelbar an die Werkstückkante angrenzt. Einerseits muss die Spanfanghaube zulassen, dass das Werkstück an den Schnittbereich des Rotationswerkzeugs herangeführt werden kann. Andererseits muss die Haube möglichst dicht an die Werkstückoberfläche heranreichen, um dort einen unerwünschten Späneaustritt zu verhindern. Zu diesem Zweck weist die Seitenwand der Spanfanghaube eine Aussparung auf, die den Querschnitt der Werkstückkante mit einem gewissen Spalt umschließt.

Im Gegenlaufbetrieb werden die vom Werkstück abgetragenen Späne in einem schrägen Winkel relativ zur Werkstückkante abgeschleudert. Ein bedeutsamer Anteil der abgeschleuderten Späne trifft nicht unmittelbar auf den vorgenannten Spalt auf und kann abgesaugt werden. Gleichwohl kann nicht verhindert werden, dass ein bestimmter Anteil von Spänen durch den Spalt unerwünscht ins Freie gelangt. Dieses Problem wird dann noch ausgeprägter, wenn die Maschine im Gleichlaufbetrieb arbeitet. In diesem Fall werden die abgetragenen Späne unmittelbar nach ihrer Entstehung im Wesentlichen parallel zur Werkstückkante abgeschleudert, in dessen Folge sie mit hoher Konzentration mehr oder weniger unmittelbar auf den genannten Spalt auftreffen und dort austreten können.

Im praktischen Betrieb müssen derartige Werkzeugmaschinen universell betrieben werden können und deshalb mit verschiedenen Einstellmöglichkeiten versehen sein. Beim Wechsel zwischen Werkstücken von unterschiedlicher Dicke muss jedes Mal auch eine Anpassung der Umfangswand bzw. der darin ausgebildeten Aussparung in der Höhen- bzw. Vertikalrichtung vorgenommen werden, um ein möglichst geringes vertikales Spaltmaß zwischen Werkstückoberfläche und Aussparungskante einzuhalten. Sinngemäß das Gleiche gilt auch bei einer Korrektur des Abstandes zwischen Antriebseinheit und Werkstückkante. Sofern beispielsweise der Radius des Werkzeuges beim Schärfen reduziert wird, geht dies mit einer Durchmesserverringerung einher, in dessen Folge das genannte Abstandsmaß korrigiert werden muss. Da die Haube an der Antriebseinheit befestigt ist, verschiebt sich gemeinsam mit der Antriebseinheit auch die Aussparung relativ zur Werkstückkante. Folglich ist auch in Tiefenrichtung eine aufwendige Korrektur der Aussparung in der Haubenwand erforderlich.

Der Erfindung liegt die Aufgabe zugrunde, eine gattungsgemäße Werkzeugmaschine derart weiterzubilden, dass auch bei variierenden Betriebsbedingungen eine zuverlässige Spanführung möglich ist.

Diese Aufgabe wird durch eine Werkzeugmaschine mit den Merkmalen des Anspruchs 1 gelöst.

Nach der Erfindung ist vorgesehen, dass die Seitenwand der Spanfanghaube aus einem Basiswandteil und mindestens einem Verschlusswandteil zusammengesetzt ist, wobei das Basiswandteil relativ zur Antriebseinheit fest positioniert ist, und wobei das mindestens eine Verschlusswandteil relativ zu dem verstellbaren Druckelement fest positioniert ist. Die feste Relativpositionierung des Verschlusswandteils ist derart ausgestaltet, dass das Verschlusswandteil gemeinsam mit dem zugehörigen Druckelement in der Vertikalrichtung einstellbar bzw. in seiner Position verstellbar ist und dabei zumindest teilweise das Basiswandteil überlappt. Außerdem begrenzt das mindestens eine Verschlusswandteil die Aussparung für den Kantenbereich des Werkstücks zumindest in der Vertikalrichtung.

Dies bedeutet mit anderen Worten nichts anderes, als dass das genannte Verschlusswandteil in Form und Höhenposition einmal an ein bestimmtes Werkstückkantenprofil angepasst und dann befestigt wird. Dadurch entsteht eine Begrenzung der Aussparung in der Vertikalrichtung mit einem fest definierten, in der Vertikalrichtung gemessenen Spaltmaß zwischen Aussparungskante und Werkstückoberfläche. Dieses Spaltmaß kann in geeigneter Weise eingestellt werden, um einerseits eine saubere und klemmfreie Hindurchführung des Werkstückes zu erzielen, und um andererseits eine möglichst ausgeprägte Dichtigkeit gegen Spanaustritt zu bewirken. Sofern nun bei der laufenden Bearbeitung ein Wechsel zwischen zwei oder mehr verschiedenen Werkstückdicken vorgenommen werden muss, wird eine entsprechende Höhenanpassung des zugehörigen Druckelementes erfolgen. Mit dieser Höhenanpassung geht aber auch eine Höhenanpassung des zugeordneten Verschlusswandteils einher. Folglich ist sichergestellt, dass das zuvor gewählte und als geeignet empfundene vertikale Spaltmaß selbsttätig beibehalten wird. Anpassungsarbeiten an der Absaughaube sind nicht erforderlich. Die Überlappung des Verschlusswandteiles mit dem Basiswandteil stellt trotz mehrteiliger Ausführung auch an dieser Stelle eine ausreichende Dichtigkeit gegen Spanaustritt sicher. Insgesamt beschränkt sich der Anpassungsaufwand beim Wechsel zwischen verschiedenen Werkstückdicken auf Anpassungstätigkeiten an dem jeweiligen Druckelement der Führungseinrichtung, ohne dass die Haube als solche berücksichtigt werden muss. Dennoch bleibt die Fang- und Führungsfunktion der Spanfanghaube beim Wechsel zwischen verschiedenen Werkstückdicken vollumfänglich erhalten.

Im praktischen Betrieb wird beim Wechsel zwischen verschiedenen Werkstückdicken nur eines der beiden Druckelemente, nämlich das obere Druckelement in seiner Höhenposition eingestellt. Dementsprechend kann es ausreichen, auch nur an diesem einen Druckelement ein zuvor beschriebenes Verschlusswandteil zu befestigen. In bevorzugter Weiterbildung der Erfindung sind jedoch ein oberes Verschlusswandteil und ein unteres Verschlusswandteil vorgesehen, die jeweils anteilig die Aussparung begrenzen, wobei das obere Verschlusswandteil relativ zum oberen Druckelement fest positioniert ist, und wobei das untere Verschlusswandteil relativ zum unteren Druckelement fest positioniert ist. Wie auch zuvor schon beschrieben, gilt hier die Bezeichnung als "fest positioniert" in dem Sinne, dass nur bei der Grundeinrichtung der Maschine eine Relativpositionierung der Verschlusswandteile zum jeweils zugeordneten Druckelement vorgenommen und dann nicht mehr verändert wird. Falls aber im Einzelfall bzw. im Rahmen der Maschineneinrichtung eine Höhenanpassung auch des zweiten, hier des unteren Druckelementes erforderlich ist, treten die gleichen vorteilhaften Wirkungen wie bei der zuvor schon beschriebenen Einstellung des oberen Druckelements ein. Sinngemäß das Gleiche gilt auch bei einer Lageanpassung der Antriebseinheit bzw. des Werkzeuges in der vertikalen Achsrichtung gemeinsam mit dem daran befestigten Haubenteil relativ zur Werkstückkante. Eine vertikale Anpassung der Aussparung in der Seitenwand ist nicht erforderlich, da die einmal gewählte Aussparungsgeometrie infolge der Verschlusswandteile beibehalten wird.

In einer bevorzugten Ausführungsform ist die Aussparung für den Kantenbereich des Werkstücks auch in einer senkrecht zur Vertikalrichtung und senkrecht zur Vorschubrichtung liegenden Tiefenrichtung zum Basiswandteil hin durch mindestens ein Verschlusswandteil begrenzt. Hierdurch kann erreicht werden, dass auch der horizontale Abstand zwischen Werkzeugantrieb und Führungseinrichtung bzw. Werkstückkante korrigiert bzw. eingestellt werden kann, ohne dass sich das in der Tiefenrichtung gemessene und wie gewünscht eingestellte Spaltmaß zwischen Aussparungskante und Werkstückkante ändert.

Es kann zweckmäßig sein, dass eine Verschlusswandteil oder die mehreren Verschlusswandteile außenseitig des fest mit der Antriebseinheit verbundenen Basiswandteiles zu positionieren. Bevorzugt sind jedoch das mindestens eine bzw. die beiden Verschlusswandteile auf der zum Innenraum der Spanfanghaube zugewandten Seite des Basiswandteils angeordnet. Dies führt dazu, dass die infolge der Überlappung im Innenraum vorhandene freie Wandkante einen möglichst großen Abstand zum Werkstück und damit zum Entstehungsort der Späne aufweist. In Verbindung mit der sich hieraus ergebenden Überlappungsrichtung ist ein Eindringen von Spänen, Staub oder dergleichen zwischen die Wandteile vermieden.

In einer zweckmäßigen Variante ist mindestens eine horizontale Schnittabdeckung vorgesehen und relativ zum Druckelement derart fest positioniert, dass sie gemeinsam mit diesem Druckelement in der Vertikalrichtung einstellbar ist. Insbesondere sind eine obere horizontale Schnittabdeckung und eine untere horizontale Schnittabdeckung vorgesehen, wobei die obere Schnittabdeckung relativ zum oberen Druckelement fest positioniert ist, und wobei die untere Schnittabdeckung relativ zum unteren Druckelement fest positioniert ist. Durch den horizontalen Verlauf wirken die Schnittabdeckungen als kanalisierende Leitelemente, welche eine gesteuerte Luftführung begünstigen, welche die Späne unter Vermeidung einer vertikalen Ausbreitung führen, und welche eine wirkungsvolle Spanabsaugung begünstigen. Die mindestens eine bzw. die beiden Schnittabdeckungen behalten ihre einmal wie gewünscht eingestellte Relativposition zur Werkstückoberfläche bei. Dickenänderungen oder andere Änderungen mit Einfluss auf die Baugruppenpositionierung haben keinen Einfluss auf das Abstandsmaß zwischen Schnittabdeckung und Werkstückoberfläche. Span- und Luftführung bleiben unverändert, so dass diese in der gewünschten Qualität erhalten bleiben.

Ein Ausführungsbeispiel der Erfindung ist nachfolgend anhand der Zeichnung näher beschrieben. Es zeigen:
- Fig. 1: in einer perspektivischen Innenansicht eine erfindungsgemäß ausgeführte Werkzeugmaschine mit einem Werkstück, welches im Kantenbereich zwischen zwei Druckelementen geführt wird, und mit einer mehrteiligen Spanfanghaube,
- Fig. 2: in einer Stirnansicht die Werkzeugmaschine nach Fig. 1 mit Einzelheiten der Seitenwand der Spanfanghaube, welche zwei an den Druckelementen befestigte Verschlusswandteile umfasst, und
- Fig. 3: die Werkzeugmaschine in der Ansicht nach Fig. 1 mit abgenommenem Werkzeug und mit weiteren Einzelheiten zur Anordnung der Verschlusswandteile sowie von horizontalen Schnittabdeckungen.

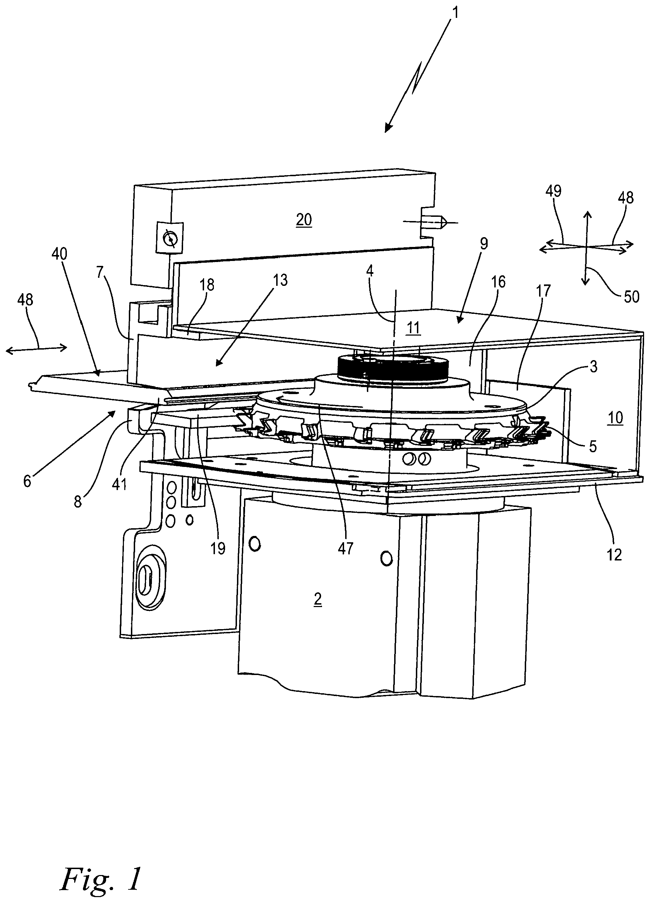

Fig. 1 zeigt in einer perspektivischen Innenansicht eine erfindungsgemäß ausgeführte Werkzeugmaschine 1 für die Kantenbearbeitung eines Werkstücks 40. Die Werkzeugmaschine 1 ist hier in ihrer gewöhnlichen Betriebsposition relativ zu einer durch einen Doppelpfeil angegebenen Vertikalrichtung 50 dargestellt, welche ihrerseits in der wirkenden Gewichtskraftrichtung verläuft. Das Werkstück 40 ist horizontal liegend, also im rechten Winkel zur Vertikalrichtung 50 für die Kantenbearbeitung positioniert und wird in einer horizontalen Vorschubrichtung 48 relativ zu einem Rotationswerkzeug 3 der Werkzeugmaschine 1 bewegt. Rechtwinklig zur Hochrichtung 50 und auch rechtwinklig zur Vorschubrichtung 48 liegt eine Tiefenrichtung 49, die ebenfalls durch einen Doppelpfeil angegeben ist.

Das Werkstück 40 ist hier beispielhaft plattenförmig ausgestaltet. Es kann aber auch beispielsweise die Form von Leisten, Latten, Balken oder dergleichen aufweisen. Als Material des Werkstückes 40 sind hier Holzwerkstoffe vorgesehen, wobei der Begriff "Holzwerkstoff' neben gewachsenem Holz auch Spanplattenmaterial oder auch anderes faseriges Material beispielsweise von Laminatfußböden beinhaltet.

Die Werkzeugmaschine 1 umfasst eine Antriebseinheit 2 mit einer vertikalen, also parallel zur Vertikalrichtung 50 liegenden Drehachse 4. Die Antriebseinheit 2 ist hier ein Elektromotor. Es kann sich aber auch um einen anderen Motor oder auch nur um das Getriebe eines an anderer Stelle positionierten Motors handeln. Das um die vertikale Drehachse 4 von der Antriebseinheit 3 drehend angetriebene Rotationswerkzeug 3 ist hier als Fräskopf ausgebildet. Es kann sich aber auch um ein Kreissägeblatt oder dergleichen handeln. Jedenfalls weist das Rotationswerkzeug 3 auf seinem Umfang eine Anzahl von Schneiden 5 auf. Die Drehrichtung des Rotationswerkzeugs 3 ist durch einen Pfeil 47 angegeben, demnach sie von oben betrachtet im Uhrzeigersinn verläuft. Das Werkstück 40 weist einen in der Vorschubrichtung 48 sich erstreckenden Kantenbereich 41 auf, der mittels der Werkzeugmaschine 1 spanend bearbeitet wird. Hierzu ist eine Führungseinrichtung 6 vorgesehen, mittels derer das Werkstück 40, genauer der Kantenbereich 41 des Werkstückes 40 in der Vorschubrichtung 48 derart am Umfangsbereich des Rotationswerkzeuges 3 entlang gefahren wird, dass der Kantenbereich 41 in Kontakt mit den Schneiden 5 kommt und mittels der Schneiden 5 zerspanend sein gewünschtes Querschnittsprofil erhält. In der zeichnerischen Darstellung nach Fig. 1 wird das Werkstück 40 in der Vorschubrichtung 48 nach links, also entgegen der Drehrichtung 47 bewegt. Folglich hat der links vom Eingriffsbereich mit den Schneiden 5 liegende Abschnitt des Kantenbereichs 41 seine Profilierung bereits erfahren, demnach hier die Bearbeitung im Gegenlauf dargestellt ist. Im Rahmen der Erfindung ist aber auch die Bearbeitung im Gleichlauf möglich, wobei dann Vorschub und Drehrichtung gleichsinnig verlaufen.

Die Führungseinrichtung 6 für das Werkstück 40 umfasst zwei in der Vertikalrichtung 50 sich gegenüberliegende Druckelemente 7, 8, nämlich ein oberes Druckelement 7 und ein unteres Druckelement 8. Das Werkstück 40 liegt auf dem unteren Druckelement 8 auf. Das obere Druckelement 7 liegt von oben auf dem Werkstück 40 auf und drückt dieses von oben auf das untere Druckelement 8. Auf diese Weise ist der Kantenbereich 41 des Werkstücks 40 sowohl in der Vertikalrichtung 50 als auch in der Tiefenrichtung 49 fixiert, kann jedoch in der Vorschubrichtung 49 relativ zur Antriebseinheit 2 bzw. zum Rotationswerkzeug 3 bewegt werden. Bei der Einrichtung der Maschine erfolgt eine Relativpositionierung der Antriebseinheit 2 mit dem Werkzeug 3 relativ zum unteren Druckelement 8 in der Vertikalrichtung 50 und auch in der Tiefenrichtung 49, so dass sich beim Zerspanen ein bestimmtes gewünschtes Profil des Kantenbereichs 41 in einer bestimmten Relativposition zum Werkstück 40 ergibt. Beispielsweise das verschleißbedingte Nachschleifen der Schneiden 5 führt jedoch zu einer Verringerung des wirksamen Werkzeugdurchmessers, was eine Lagekorrektur erfordert. Für eine solche Lagekorrektur wird die Antriebseinheit 2 mit dem Rotationswerkzeug 3 in der Tiefenrichtung 49 näher an das untere Druckelement 8 herangerückt. Natürlich ist sinngemäß auch eine Höhenkorrektur in der Vertikalrichtung 50 möglich.

Im praktischen Betrieb kann es erforderlich werden, Werkstücke 40 mit wechselnden Dicken, ansonsten jedoch mit gleichem Fräsprofil zu bearbeiten. In diesem Falle bleibt die Position des unteren Druckelements 8, der Antriebseinheit 2 und des Rotationswerkzeugs 3 unangetastet, während allein eine Höheneinstellung bzw. Höhenanpassung des oberen Druckelementes 7 mittels eines schematisch angedeuteten Höhenverstellers 20 vorgenommen wird.

In Fig. 1 ist noch erkennbar, dass der Bereich des Rotationswerkzeuges 3 und dessen Eingriff mit dem Kantenbereich 41 des Werkstücks 40 von einer Spanfanghaube 9 umschlossen ist. Die Spanfanghaube 9 weist in ihrer der Führungseinrichtung 6 bzw. dem Werkstück 40 zugewandten Richtung eine offene Seite 13 auf und stellt im Übrigen ein geschlossenes Gehäuse dar. Hierzu umfasst sie eine oberhalb des Rotationswerkzeugs 3 positionierte Deckwand 11 sowie einen unterhalb des Rotationswerkzeugs 3 positionierten Boden 12. Außerdem umfasst sie mindestens eine Seitenwand 10, die hier in der durch die Tiefenrichtung 49 und die Vertikalrichtung 50 aufgespannten Ebene liegt und sich folglich quer zur Vorschubrichtung 48 erstreckt. Auf der gegenüberliegenden, hier dem Betrachter zugewandten Seite ist ebenfalls eine solche Seitenwand vorgesehen. Diese ist hier zur besseren Übersicht zwar nicht dargestellt, wohl aber gleichermaßen in erfindungsgemäßer Weise ausgeführt. Die nachfolgende Beschreibung der zeichnerisch dargestellten Seitenwand 10 gilt also gleichermaßen für die erfindungsgemäße Ausgestaltung der weiteren, nicht dargestellten Seitenwand. Im Übrigen umfasst die Spanfanghaube 9 auf der der Führungseinrichtung 6 gegenüberliegenden Frontseite eine Wand, die hier ebenfalls zur besseren Übersicht nicht dargestellt ist. Schließlich ist noch zu erwähnen, dass die Spanfanghaube 9 mit ihrer offenen Seite 13 bis an die Führungseinrichtung 6 heranreicht. Die offene Seite 13 ist durch die Führungseinrichtung 6 bzw. durch die oberen und unteren Druckelemente 7, 8 abgedeckt, so dass der Innenraum der Spanfanghaube 9, in welchem sich das Rotationswerkzeug 3 und der zu bearbeitende Kantenbereich 41 des Werkstücks 40 befinden, im Wesentlichen hermetisch abgeschlossen ist.

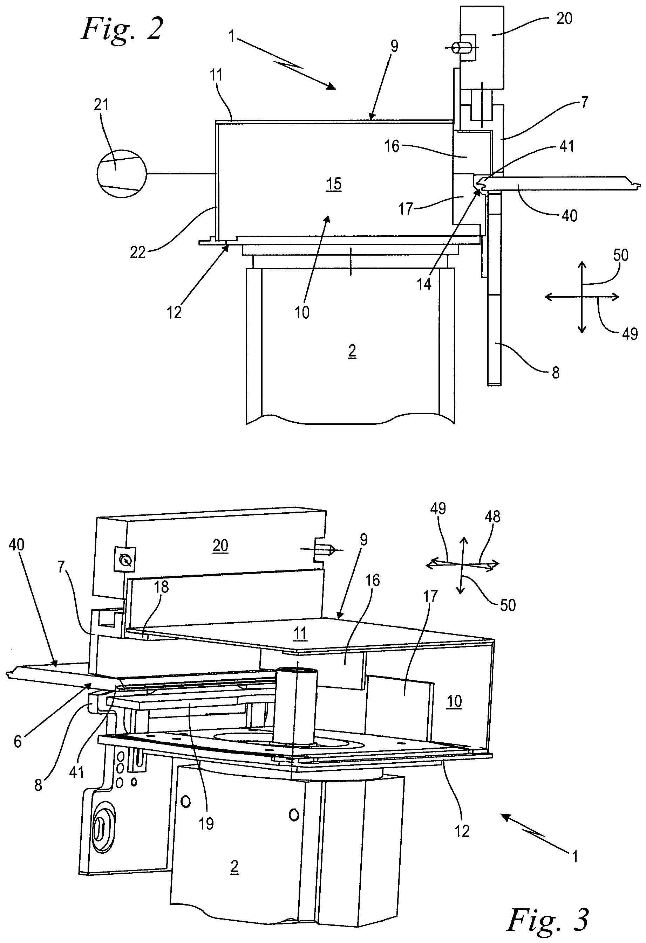

Fig. 2 zeigt in einer Seitenansicht die Werkzeugmaschine 1 nach Fig. 1. Hier ist zunächst erkennbar, dass an den Innenraum der Spanfanghaube 9 ein schematisch angedeutetes Sauggebläse 21 angeschlossen ist, mittels dessen die bei der Bearbeitung des Kantenbereichs 41 entstehenden Späne aus dem Innenraum der Spanfanghaube 9 abgesaugt werden.

In der Seitenansicht nach Fig. 2 ist des Weiteren gut erkennbar, dass der zu bearbeitende Kantenbereich 41 des Werkstücks 40 zwischen den beiden Druckelementen 7, 8 gehalten ist und dabei in den Innenraum der Spanfanghaube 9 hervorsteht. Da das Werkstück 40 in der Vorschubrichtung 48 (Fig. 1) deutlich länger als die seitliche Erstreckung der Spanfanghaube 9 ist, ist die Seitenwand 10 der Spanfanghaube 9 mit einer Aussparung 14 versehen, die den zu bearbeitenden Kantenbereich 41 des Werkstücks 40 aufnimmt. Die Aussparung 14 ist in Form und Größe derart an den Querschnitt des Kantenbereichs 41 angepasst, dass zwischen der Aussparungskante und der Werkstückoberfläche ein bestimmtes Spaltmaß in gewünschter Größe verbleibt.

Um die solchermaßen erzielte Konturanpassung der Aussparung 14 an den Querschnitt des Kantenbereichs 41 bei den im Zusammenhang mit Fig. 1 beschriebenen wechselnden Betriebsbedingungen aufrecht zu erhalten, ist nach der Erfindung eine mehrteilige Ausgestaltung der Seitenwand 10 vorgesehen. Die Seitenwand 10 besteht nämlich aus einem Basiswandteil 15 und mindestens einem, hier zwei Verschlusswandteilen 16, 17. Das Basiswandteil 15, die Rückwand 22, die obere Deckwand 11 und der Boden 12 bilden zusammen einen Haubengrundkörper der Spanfanghaube 9 und sind an der Antriebseinheit 2 befestigt, also relativ zu dieser fest positioniert. Die genannten Teile des Haubengrundkörpers werden also gemeinsam mit der Antriebseinheit bei einem Verstell- bzw. Justiervorgang mit verstellt bzw. mit justiert. Abweichend davon ist das obere Verschlusswandteil 16 relativ zum oberen Druckelement 7 derart fest positioniert, dass es gemeinsam mit dem oberen Druckelement 7 in der Vertikalrichtung 50 einstellbar bzw. in seiner Höhenposition verstellbar ist. Mit anderen Worten bilden das obere Druckelement 7 und das obere Verschlusswandteil 16 eine Baueinheit, deren Höhenposition bei Betätigung des Höhenverstellers 20 gemeinsam in der Vertikalrichtung 50 eingestellt wird. Hierzu kann das obere Verschlusswandteil 16 beispielsweise fest mit dem oberen Druckelement 7 verschraubt sein. Es ist aber auch im Rahmen der Erfindung eine solche Verbindung zwischen dem Verschlusswandteil 16 und dem oberen Druckelement 7 derart möglich, dass eine Relativbewegung zwischen dem oberen Druckelement 7 und dem oberen Verschlusswandteil 16 in der Vorschubrichtung 48 (Fig. 1) möglich ist. Das obere Druckelement 7 kann dann in der Vorschubrichtung 48 (Fig. 1) gemeinsam mit dem Werkstück 40 bewegt werden, während das Verschlusswandteil 16 in der genannten Vorschubrichtung 48 (Fig. 1) seine Position beibehält. Eine gemeinsame Verstellung erfolgt dann nur in der Vertikalrichtung 50.

Optional ist im gezeigten Ausführungsbeispiel das zweite, hier untere Verschlusswandteil 17 vorgesehen, welches analog zum oberen Verschlusswandteil 16 mit dem zugeordneten, hier unteren Druckelement 8 derart verbunden ist, dass es relativ zu diesem fest positioniert ist. Im Falle einer Positionsjustierung der Antriebseinheit 2 zusammen mit dem oben erwähnten Haubengrundkörper und/oder des oberen Druckelementes 7 zusammen mit dem oberen Verschlusswandteil 16 behält die Baueinheit aus dem unteren Druckelement 8 mit dem unteren Verschlusswandteil 17 ihre Position bei. Umgekehrt wird bei einer Positionsverstellung des unteren Druckelementes 8 gleichermaßen auch das untere Verschlusswandteil 17 mit verstellt.

Die beiden Verschlusswandteile 16, 17 überlappen einander und überlappen jeweils auch zumindest teilweise das Basiswandteil 15, wie es ergänzend in Fig. 3 erkennbar ist. Außerdem ergibt sich aus Fig. 2, dass das obere Verschlusswandteil 16 die Aussparung 14 in der Vertikalrichtung 50 nach oben mit seiner unteren Kante begrenzt. Das untere Verschlusswandteil 17 hat einen solchen Kantenverlauf, dass es die Aussparung 14 in der Vertikalrichtung 50 nach unten und außerdem auch in der Tiefenrichtung 49 zum Basiswandteil 15 hin begrenzt. Natürlich ist auch eine analoge Ausgestaltung des oberen Verschlusswandteiles 16 derart möglich, dass dieses in Kombination oder alternativ zum unteren Verschlusswandteil 17 die Aussparung 14 in der Tiefenrichtung 49 zum Basiswandteil 15 hin begrenzt. Im gezeigten bevorzugten Ausführungsbeispiel ist also die Aussparung 14 ausschließlich von Kanten der Verschlusswandteile 16, 17 umschlossen, ohne dass hierbei das Basiswandteil 15 eine Rolle spielt. Sofern also ein Werkstück 40 mit größerer oder geringerer Dicke bearbeitet werden soll, wird das obere Druckelement 7 gemeinsam mit dem oberen Verschlusswandteil 16 um das Maß der Dickenänderung in der Vertikalrichtung 50 angehoben oder abgesenkt. Dabei bleibt im Bereich der Aussparung 14 der vertikale Kantenabstand des Verschlusswandteiles 16 zur Oberfläche des Werkstücks 40 erhalten. Außerdem kann die Position der Antriebseinheit 2 zusammen mit dem Rotationswerkzeug 3 (Fig. 1) in der Tiefenrichtung 49 relativ zur Funktionseinheit aus den beiden Druckelementen 7, 8 und dem dazwischen geführten Werkstück 40 korrigiert bzw. eingestellt werden. Eine damit einhergehende Lageänderung betrifft aber nur das Basiswandteil 15 der Seitenwand 10, nicht aber die beiden Verschlusswandteile 16, 17. Damit bleibt auch das in der horizontalen Tiefenrichtung 49 gemessene Spaltmaß bzw. der horizontale Kantenabstand zwischen den Verschlusswandteilen 16, 17 und dem Werkstück 40 im Bereich der Aussparung 14 erhalten.

Insgesamt wird erreicht, dass ungeachtet aller möglichen Einstell- und Anpassvorgänge die gewählte Anpassung der Form der Aussparung 14 an den Querschnitt des Kantenbereichs 41 vom Werkstück 40 erhalten bleibt. Es sind keine Austausch- oder Formatteile erforderlich. Dennoch kann das Spaltmaß zwischen der Aussparungskante und der Werkstückoberfläche so gering gehalten werden, dass praktisch keine Späne aus dem Innenraum der Spanfanghaube 9 austreten. Dies wird nicht nur im vergleichsweise unkritischen Fall des Gegenlaufbetriebes nach Fig. 1 erreicht, wobei dann die Späne nach rechts in einem schrägen Winkel zur Werkstückkante gegen den Bereich der rechten Verschlusswandteile 16, 17 geschleudert werden. Vielmehr bleibt die Dichtwirkung auch im Gleichlaufbetrieb erhalten, wenn die soeben abgetragenen Späne tangential und parallel zur Werkstückkante unmittelbar zur Aussparung 14 hin abgeschleudert werden.

Fig. 3 zeigt die Werkzeugmaschine 1 nach den Fig. 1 und 2 in der perspektivischen Ansicht nach Fig. 1, jedoch mit abgenommenem Rotationswerkzeug 3. Hier ist zu erkennen, dass die beiden Verschlusswandteile 16, 17 auf der zum Innenraum der Spanfanghaube 9 zugewandten Seite des Basiswandteils 15 angeordnet sind. Auf dieser Innenseite überlappen sie spaltfrei das Basiswandteil 15. Außerdem überlappen sie sich gegenseitig in der Vertikalrichtung 50, so dass insgesamt eine geschlossene Seitenwand 10 gebildet ist. Natürlich ist es aber auch möglich, eines der beiden Verschlusswandteile 16, 17 oder auch beide Verschlusswandteile 16, 17 auf der Außenseite des Basiswandteils 15 anzuordnen.

Aus der Zusammenschau der Fig. 1 bis 3 wird noch deutlich, dass die Werkzeugmaschine 1 mindestens im Innenraum der Spanfanghaube 9 eine horizontale Schnittabdeckung 18, 19 aufweist. Im gezeigten bevorzugten Ausführungsbeispiel sind eine obere horizontale Schnittabdeckung 18 und eine untere horizontale Schnittabdeckung 19 vorgesehen. Analog zu den oben beschriebenen Verschlusswandteilen 16, 17 ist die obere Schnittabdeckung 18 relativ zum oberen Druckelement fest positioniert, während die untere Schnittabdeckung 19 relativ zum unteren Druckelement fest positioniert ist. Ungeachtet aller oben schon beschriebenen Einstellvorgänge behalten dadurch die Schnittabdeckungen 18, 19 ihre einmal vorgegebene Relativposition zur Werkstückoberfläche bei. In der konkreten Ausgestaltung sind die horizontalen Schnittabdeckungen 18, 19 durch flache Elemente gebildet, die sich jeweils in der durch die Vorschubrichtung 48 und die Tiefenrichtung 49 aufgespannten Horizontalebene erstrecken und damit parallel zu den Flachseiten des Werkstücks 40 liegen. Zwischen beiden horizontalen Schnittabdeckungen 18, 19 rotiert im Betrieb das Rotationswerkzeug 3, so dass die hiervon erzeugten Späne zwischen den beiden Schnittabdeckungen 18, 19 geführt und gesteuert dem Sauggebläse 21 (Fig. 2) zugeführt werden können. Insbesondere der vertikale Abstand der beiden Schnittabdeckungen 18, 19 zur Werkstückoberfläche bleibt auch bei der Bearbeitung von unterschiedlich dicken Werkstücken 40 gleich, so dass auch die Spanführungswirkung unverändert bleibt.

Für die obere Schnittabdeckung 18 ist in der konkreten Ausgestaltung ein L-Profil vorgesehen, dessen horizontaler Schenkel unter die obere Deckwand 11 in den Innenraum der Spanfanghaube 9 eingreift und die obere Schnittabdeckung 18 bildet. Der vertikale Schenkel des genannten L-Profils deckt den Spaltbereich zwischen dem Höhenversteller 20 und dem oberen Druckelement 7 ab, und zwar ungeachtet der jeweils eingestellten Höhenposition des oberen Druckelements 7. Der horizontale, die obere Schnittabdeckung 18 bildende Schenkel ist hier zeichnerisch derart dargestellt, dass er unmittelbar unterhalb der oberen Deckwand 11 liegt. Er kann aber auch weiter nach unten näher an das Werkstück 40 positioniert werden. Im Falle der unteren Schnittabdeckung 19 ist ein horizontales Leitblech vorgesehen, welches mittels Schraubwinkeln am unteren Druckelement 8 befestigt bzw. mit diesem verschraubt ist. Im Übrigen ist das untere Verschlusswandteil 17 fest mit der unteren Schnittabdeckung 19 verbunden, während das obere Verschlusswandteil 16 fest mit der oberen Schnittabdeckung 18 verbunden ist, so dass diesbezüglich eine immer gleiche Relativpositionierung aufrecht erhalten bleibt.

Eingangs wurde schon erwähnt, dass die mehrteilige Ausgestaltung gleichermaßen für die eine hier gezeigte Seitenwand 10 und auch für die gegenüberliegende, hier nicht dargestellte Seitenwand gilt. Im Rahmen der Erfindung kann es aber ausreichen, nur eine einzelne Seitenwand 10 in der erfindungsgemäßen Weise auszugestalten, wobei es sich dann bevorzugt um diejenige Seitenwand 10 handelt, welche sich bezogen auf die Drehrichtung 47 unmittelbar hinter dem Eingriffsbereich zwischen Rotationswerkzeug 3 und Werkstück 40 befindet, welche also unmittelbar vom Strahl der auftretenden Späne betroffen ist. Auf der gegenüberliegenden, weniger durch Späne belasteten Seite kann eine abweichende Wandkonstruktion ausreichend sein.

## Patentansprüche

1. Werkzeugmaschine (1) zur Kantenbearbeitung eines Werkstücks (40), umfassend eine Antriebseinheit (2) für ein Rotationswerkzeug (3) mit einer vertikalen Drehachse (4), eine Führungseinrichtung (6) zur Führung des Werkstücks (40) in einer horizontalen Vorschubrichtung (48), sowie eine Spanfanghaube (9), wobei die Führungseinrichtung (6) zumindest zwei in einer Vertikalrichtung (50) sich gegenüberliegende Druckelemente (7, 8) zur Anlage am Werkstück (40), nämlich ein oberes Druckelement (7) und ein unteres Druckelement (8) umfasst, wobei zumindest eines der beiden Druckelemente (7, 8) relativ zum jeweils anderen Druckelement (8, 7) und auch relativ zur Antriebseinheit (2) in der Vertikalrichtung (50) einstellbar ist, und wobei die Spanfanghaube (9) mindestens eine Seitenwand (10) umfasst, die sich quer zur Vorschubrichtung (48) erstreckt, und die eine Aussparung (14) zur Aufnahme eines zu bearbeitenden Kantenbereichs (41) des Werkstücks (40) aufweist, **dadurch gekennzeichnet, dass** die Seitenwand (10) aus einem Basiswandteil (15) und mindestens einem Verschlusswandteil (16, 17) zusammengesetzt ist, wobei das Basiswandteil (15) relativ zur Antriebseinheit (2) fest positioniert ist, wobei das mindestens eine Verschlusswandteil (16, 17) relativ zu dem Druckelement (7, 8) derart fest positioniert ist, dass es gemeinsam mit diesem in der Vertikalrichtung (50) einstellbar ist und dabei zumindest teilweise das Basiswandteil (15) überlappt, und wobei das mindestens eine Verschlusswandteil (16, 17) die Aussparung (14) für den Kantenbereich (41) des Werkstücks (40) zumindest in der Vertikalrichtung (50) begrenzt.

2. Werkzeugmaschine nach Anspruch 1,
**dadurch gekennzeichnet, dass** ein oberes und ein unteres Verschlusswandteil (16, 17) vorgesehen sind, die die Aussparung (14) begrenzen, wobei das obere Verschlusswandteil (16) relativ zum oberen Druckelement (7) fest positioniert ist, und wobei das untere Verschlusswandteil (17) relativ zum unteren Druckelement (8) fest positioniert ist.

3. Werkzeugmaschine nach Anspruch 1 oder 2,
**dadurch gekennzeichnet, dass** die Aussparung (14) für den Kantenbereich (41) des Werkstücks (40) auch in einer senkrecht zur Vertikalrichtung (50) und senkrecht zur Vorschubrichtung (48) liegenden Tiefenrichtung (49) zum Basiswandteil (15) hin durch mindestens ein Verschlusswandteil (16, 17) begrenzt ist.

4. Werkzeugmaschine nach einem der Ansprüche 1 bis 3,
**dadurch gekennzeichnet, dass** das mindestens eine Verschlusswandteil (16, 17) auf der zum Innenraum der Spanfanghaube (9) zugewandten Seite des Basiswandteils (15) angeordnet ist.

5. Werkzeugmaschine nach einem der Ansprüche 1 bis 4,
**dadurch gekennzeichnet, dass** mindestens eine horizontale Schnittabdeckung (18, 19) vorgesehen und relativ zum Druckelement (7, 8) derart fest positioniert ist, dass sie gemeinsam mit diesem in der Vertikalrichtung (50) einstellbar ist.

6. Werkzeugmaschine nach Anspruch 5,
**dadurch gekennzeichnet, dass** eine obere und eine untere horizontale Schnittabdeckung (18, 19) vorgesehen sind, wobei die obere Schnittabdeckung (18) relativ zum oberen Druckelement (7) fest positioniert ist, und wobei die untere Schnittabdeckung (19) relativ zum unteren Druckelement (8) fest positioniert ist.

## Claims

1. Machine tool (1) for machining the edges of a workpiece (40), comprising a drive unit (2) for a rotating tool (3) with a vertical rotation axis (4), a guiding device (6) for guiding the workpiece (40) in a horizontal feed direction (48) and a chip capturing hood (9), wherein the guiding device (6) comprises at least two pressure elements (7, 8) opposite one another in a vertical direction (50) for contacting the workpiece (40), namely an upper pressure element (7) and a lower pressure element (8), such that at least one of the two pressure elements (7, 8) can be adjusted in the vertical direction (50) relative to the respective other pressure element (8, 7) and also relative to the drive unit (2), and wherein the chip capturing hood (9) has at least one sidewall (10) that extends transversely to the feed direction (48), and which has a cut-out for receiving an edge area (41) of the workpiece (40) to be machined, **characterised in that** the sidewall (10) comprises a basic wall component (15) and at least one closing wall component (16, 17), such that the basic wall component (15) is in a fixed position relative to the drive unit (2) whereas the at least one closing wall component (16, 17) is in a fixed position relative to the pressure element (7, 8) so that together with the latter it can be adjusted in the vertical direction (50) and during this it at least partially overlaps the basic wall component (15), and such that the at least one closing wall component (16, 17) delimits the cut-out (14) for the edge area (41) of the workpiece (40) at least in the vertical direction (50).

2. Machine tool according to Claim 1,
**characterised in that** an upper and a lower closing wall component (16, 17) are provided, which delimit the cut-out (14), wherein the upper closing wall component (16) is in a fixed position relative to the upper pressure element (7) and wherein the lower closing wall component (17) is in a fixed position relative to the lower pressure element (8).

3. Machine tool according to Claims 1 or 2,
**characterised in that** the cut-out (14) for the edge area (41) of the workpiece (40) is also delimited by at least one closing wall component (16, 17) in a depth direction (49) perpendicular to the vertical direction (50) and perpendicular to the feed direction (48) toward the basic wall component (15).

4. Machine tool according to any of Claims 1 to 3,
**characterised in that** the at least one closing wall component (16, 17) is arranged on the side of the basic wall component (15) that faces toward the inside space of the chip capturing hood (9).

5. Machine tool according to any of Claims 1 to 4,
**characterised in that** at least one horizontal cut cover (18, 19) is provided and is positioned fixed relative to the pressure element (7, 8) in such manner that together with the latter they can be adjusted in the vertical direction (50).

6. Machine tool according to Claim 5,
**characterised in that** an upper and a lower cut cover (18, 19) are provided, such that the upper cut cover (18) is positioned fixed relative to the upper pressure element (7) and the lower cut cover (19) is positioned fixed relative to the lower pressure element (8).

## Revendications

1. Machine-outil (1) pour l'usinage des bords d'une pièce (40), comprenant une unité d'entraînement (2) pour un outil rotatif (3) avec un axe de rotation vertical (4), un dispositif de guidage (6) pour le guidage de la pièce (40) dans une direction d'avance horizontale (48), ainsi qu'un capot de collecte de copeaux (9), dans laquelle le dispositif de guidage (6) comprend au moins deux éléments de pression (7, 8) opposés dans une direction verticale (50) pour l'application sur la pièce (40), à savoir un élément de pression supérieur (7) et un élément de pression inférieur (8), dans laquelle au moins un des deux éléments de pression (7, 8) peut être réglé par rapport à respectivement l'autre élément de pression (8, 7) et aussi par rapport à l'unité d'entraînement (2) dans la direction verticale (50), et dans laquelle le capot de collecte de copeaux (9) comprend au moins une paroi latérale (10), qui s'étend transversalement à la direction d'avance (48), et qui présente un évidement (14) pour la réception d'une zone de bord à usiner (41) de la pièce (40), **caractérisée en ce que** la paroi latérale (10) se compose d'une partie de paroi de base (15) et d'au moins une partie de paroi de fermeture (16, 17), dans laquelle la partie de paroi de base (15) est positionnée stationnaire par rapport à l'unité d'entraînement (2), dans laquelle l'au moins une partie de paroi de fermeture (16, 17) est positionnée stationnaire par rapport à l'élément de pression (7, 8) de sorte qu'elle peut être réglée conjointement avec celui-ci dans la direction verticale (50) et chevauche ce faisant au moins en partie la partie de paroi de base (15), et dans laquelle l'au moins une partie de paroi de fermeture (16, 17) délimite l'évidement (14) pour la zone de bord (41) de la pièce (40) au moins dans la direction verticale (50).

2. Machine-outil selon la revendication 1,
**caractérisée en ce qu'**une partie de paroi de fermeture supérieure et une partie de paroi de fermeture inférieure (16, 17) sont prévues, qui délimitent l'évidement (14), dans laquelle la partie de paroi de fermeture supérieure (16) est positionnée stationnaire par rapport à l'élément de pression supérieur (7), et dans laquelle la partie de paroi de fermeture inférieure (17) est positionnée stationnaire par rapport à l'élément de pression inférieur (8).

3. Machine-outil selon la revendication 1 ou 2,
**caractérisée en ce que** l'évidement (14) pour la zone de bord (41) de la pièce (40) est également délimité dans une direction de profondeur (49) située perpendiculairement à la direction verticale (50) et perpendiculairement à la direction d'avance (48) par rapport à la partie de paroi de base (15) par au moins une partie de paroi de fermeture (16, 17).

4. Machine-outil selon l'une quelconque des revendications 1 à 3,
**caractérisée en ce que** l'au moins une partie de paroi de fermeture (16, 17) est agencée sur le côté de la partie de paroi de base (15) tourné vers l'espace intérieur du capot de collecte de copeaux (9).

5. Machine-outil selon l'une quelconque des revendications 1 à 4,
**caractérisée en ce qu'**au moins un recouvrement de coupe horizontal (18, 19) est prévu et positionné stationnaire par rapport à l'élément de pression (7, 8) de sorte qu'il peut être réglé conjointement avec celui-ci dans la direction verticale (50).

6. Machine-outil selon la revendication 5,
**caractérisée en ce qu'**un recouvrement de coupe horizontal supérieur et un recouvrement de coupe horizontal inférieur (18, 19) sont prévus, dans laquelle le recouvrement de coupe supérieur (18) est positionné stationnaire par rapport à l'élément de pression supérieur (7), et dans laquelle le recouvrement de coupe inférieur (19) est positionné stationnaire par rapport à l'élément de pression inférieur (8).
